# EUROPÄISCHE PATENTSCHRIFT

(11) **EP 2 536 008 B1**
(45) Veröffentlichungstag und Bekanntmachung des Hinweises auf die Patenterteilung: **22.10.2014**
(21) Anmeldenummer: 12003607.4
(22) Anmeldetag: 09.05.2012
(51) Int. Cl.: H02K 15/095

(54) **Verfahren und Vorrichtung für die Bewicklung von Statorhalbschalen**
Method and device for winding stator half shells
Procédé et dispositif d'enroulement de demi-coques de stator

(30) Priorität: 18.06.2011 DE 102011104380
(43) Veröffentlichungstag der Anmeldung: 19.12.2012
(73) Patentinhaber: Aumann GmbH, 32339 Espelkamp (DE)
(72) Erfinder: Hagedorn, Jürgen, 32312 Lübbecke (DE); Klenke, Dirk, 31604 Raddestorf (DE)
(74) Vertreter: Schober, Mirko

(56) Entgegenhaltungen:
- EP-A2- 0 553 899
- JP-A- 59 117 446
- JP-A- 2009 118 676
- US-A- 3 648 938
- US-A- 5 182 848

## Beschreibung

Die Erfindung betrifft ein Verfahren und eine Vorrichtung für die Bewicklung von Statorhalbschalen.

Bei zweipoligen Statoren für Elektromotoren, wie sie z.B. in Handwinkelschleifern oder Handbohrmaschinen eingesetzt werden, besteht das Problem, den zu einer Spule zu wickelnden Draht beim Bewickeln in die Freiräume zwischen der Statorwand und den an der Innenseite der Statorhalbschalen vorstehenden Polhörnern einzubringen.

Eine derzeitige Möglichkeit, dieses Problem zu lösen, besteht darin, den Draht zunächst zu einer Spule zu wickeln und dann in die Nuten zwischen Polhörnern und Statorwänden einzusetzen. Dabei werden die Feldspulen mit Isolationspapier versehen, welches die Feldspulen von der regelmäßig als Blechpaket ausgeführten Statorhalbschale trennt. Das Papier muss in einem umständlichen Verfahren um die Wirkstränge der Spule gefaltet und beispielsweise mit einem Klebestreifen gesichert werden.

Wird eine fertig gewickelte Spule in die Nuten eingebracht, so müssen die Nuten geometrisch so geformt sein, dass die fertig geformte Spule über die Polhörner gezogen werden kann.

Hieraus ergibt sich eine Beschränkung der möglichen Geometrie der Polhörner, welche zum einen zu einer im Hinblick auf den magnetischen Fluss nicht optimalen Gestaltung der Polhörner, zum anderen zu einer nicht vollständigen Auffüllung des Nutgrundes führt. Soll die Spule nach dem Einbringen in die Nuten mit einer Beschichtung versehen werden, indem sie beispielsweise in einem Kurzschlussverfahren elektrisch gewärmt und in ein Pulverbad getaucht wird, so muss die Spule dabei zusätzlich in Form gehalten werden, damit sich die Geometrie, die bei dem Einsetzvorgang erzeugt worden ist, nicht verändert.

Eine weitere Möglichkeit zur Bewicklung einer derartigen Statorhalbschale ist das Direktbewickeln mit einem Nadelwickelsystem. Dabei finden in der Regel Kunststoff-Isolierteile Verwendung, die die Isolation zwischen dem Draht und der Statorhalbschale gewährleisten. Nachteilig ist hierbei, dass der entstehende Wickelkopf bei dem Nadelwickelverfahren nicht die gewünschte halbkreisförmige Form annimmt, so dass das Ziel einer möglichst kompakten Gestaltung des Stators nicht im ausreichenden Maße erreicht werden kann. Weiterhin verschlechtern die Kunststoff-Isolierteile den Füllgrad der Nutschlitze und damit die Effizienz der resultierenden Statoren.

Das Dokument US 3 648 938 offenbart eine Vorrichtung gemäss dem Oberbegriff des Anspruchs 7.

Weiterhin sind aus der EP 225 679 A1 ein Verfahren und eine Vorrichtung zum Wickeln von Spulen für Statoren der in Rede stehenden Art offenbart, bei dem ein rotierendes Wickelwerkzeug, ein sogenannter Flyer, um eine zu bewickelnde Statorhalbschale rotiert, welche in einer Wickelform aufgenommen ist. Dabei wird eine Drahtleithülse derart an der Innenseite der Statorhalbschale angelegt, dass der Draht durch die Wickelform und die Drahtleithülse in die Nutschlitze hinein geführt wird. Dieses Verfahren hat jedoch den Nachteil, dass sich die Wicklung in den Nuten zunächst im inneren Bereich der Nuten entlang der Polhörner aufbaut, wodurch die Nutschlitze ebenfalls nicht voll ausgenutzt bzw. nicht optimal gestaltet werden können. Weiterhin kann es dazu kommen, dass das Isolationspapier, welches regelmäßig zwischen der Statorhalbschale und dem Draht zur Isolation vorgesehen wird, im Bereich der Ränder der Statorhalbschale einreißt.

Der Erfindung liegt daher die Aufgabe zugrunde, ein Verfahren und eine Vorrichtung zur Wicklung eines Drahtes zu einer Spule für einen zweipoligen Stator anzugeben, welche die erwähnten Nachteile nicht oder in reduziertem Maße aufweisen.

Gelöst wird die Aufgabe durch ein Verfahren mit den Merkmalen des Anspruchs 1 und eine Vorrichtung mit den Merkmalen des Anspruchs 7. Die Merkmale der Unteransprüche betreffen vorteilhafte Ausführungsformen.

Erfindungsgemäß wird eine zu bewickelnde Statorhalbschale an einem Aufnahmewerkzeug aufgenommen. Dabei weist die Außenseite der Statorhalbschale zu dem Aufnahmewerkzeug hin. Ein Gegenlagerwerkzeug greift an der Innenseite der Statorhalbschale an, so dass die Nuten zwischen den Polhörnern und der Statorwand durch einen Spalt zwischen dem Aufnahmewerkzeug und dem Gegenlagerwerkzeug zugänglich sind. Ein Wickelwerkzeug, welches vorzugsweise um eine Achse rotiert, insbesondere ein sogenannter Flyer, dient zur Zuführung des Drahtes. Dabei ist die Statorhalbschale relativ zur Rotationsachse des Wickelwerkzeugs so positioniert, dass die Längsachse eines mit der Statorhalbschale gebildeten Stators die Rotationsachse des Wickelwerkzeugs rechtwinklig schneiden würde. Insbesondere läuft die Rotationsachse dabei durch den Schwerpunkt der Projektionsfläche der am Aufnahmewerkzeug aufgenommenen Statorhalbschale in Richtung der Rotationsachse.

Erfindungsgemäß ist vorgesehen, dass der Draht beim Bewickeln im Bereich des Wickelkopfs in Richtung der Außenseite der an dem Aufnahmewerkzeug aufgenommenen Statorhalbschale abgelenkt wird. Hierfür weist das Gegenlagerwerkzeug im Bereich mindestens eines Wickelkopfes der zu erzeugenden Spule ein Drahtablenkelement auf.

Das Drahtablenkelement tritt dabei in Richtung der Außenseite der am Aufnahmewerkzeug aufgenommenen Statorhalbschale aus der Kontur des Gegenlagerwerkzeugs hervor. Für die geometrische Gestaltung des Drahtablenkelements ist wichtig, dass es in ausreichendem Maße abgerundet ist, so dass der an dem Ablenkelement vorbei streichende Draht nicht durch scharfe Kanten oder ähnliches beschädigt werden kann. Des Weiteren muss das Ablenkelement so gestaltet sein, dass es bei einer geeignet gewählten Wickelgeschwindigkeit, was insbesondere bedeutet, bei einer geeignet gewählten Drehzahl des rotierenden Wickelwerkzeugs, dem vom Wickelwerkzeug zur bereits fertigen Wicklung sich erstreckenden Drahtabschnitt einen Bewegungsimpuls in Richtung der Außenseite der Statorhalbschale, d.h. in Richtung des Aufnahmewerkzeugs zu verleihen.

Vorzugsweise sind daher die Flächen, die in Richtung der Längsachse der Statorhalbschale orientiert sind, d.h. die Flächen, an denen der Draht beim Bewickeln abgleitet, so ausgebildet, dass sie eine zum Aufnahmewerkzeug hin abschüssige Abgleitfläche bilden. Wenn der Draht durch das rotierende Wickelwerkzeug über diese Fläche gezogen wird, so erhält der Drahtabschnitt einen Bewegungsimpuls, durch den der Draht aufgrund seiner Eigenträgheit in die hinteren Bereiche der Nuten, d.h. in die Statorwand seitigen Bereiche am Grund der Nut befördert wird, anstelle sich Windung für Windung entlang der Polhörner an diese anzulegen und einen Statorwand seitigen Raumbereich der Nut nicht erreichen zu können.

Dabei verliert der Drahtabschnitt zwischen dem Wickelwerkzeug und dem bereits zur Spule gewickelten Drahtabschnitt nach der Ablenkung durch das Drahtablenkelement vorzugsweise den Kontakt zu dem Drahtablenkelement, bevor er seine Endposition in der zu wickelnden Spule einnimmt. Dies bedeutet, dass der Draht durch das Drahtablenkelement nicht berührend in seine Endposition geführt wird, sondern nur die auf dessen Trägheit beruhende Flugbahn des Drahtes derart beeinflusst wird, dass diese im ansonsten schwer zu erreichenden Bereich des Nutgrundes endet.

Vorteilhafterweise weist das Gegenlagerwerkzeug Schieberelemente auf, mit denen die Drahtabschnitte, die zwischen den Polhörnern und der Statorwand in den Nuten verlaufen, in Richtung des Aufnahmewerkzeugs gedrückt werden können. Bei der Bewicklung ergibt sich aufgrund des mechanischen Biegewiderstands des Drahtes eine Ausbauchung des gewickelten Drahtes, der zwischen den Polhörnern und der Statorwand in den Nuten verläuft. Der Draht verläuft folglich nicht wie gewünscht längsparallel zur Statorlängsachse, sondern in Biegungen. Daher ist es vorteilhaft vorzusehen, dass Schieberelemente einen Druck auf die Drahtwicklung in den Nuten ausüben, um so den gewünschten, zur Statorlängsachse längsparallelen Idealverlauf der Drähte und die damit verbundene möglichst hohe Nutausfüllung so weit wie möglich zu ermöglichen.

Weiterhin ist es vorteilhaft, wenn das Aufnahmewerkzeug eine Andruckvorrichtung zur Fixierung eines Isolationsmaterials in der Statorwand aufweist. Bei dem Isolationsmaterial kann es sich beispielsweise um ein Papier handeln, das zwischen den Wicklungen der Spule und der Statorhalbschale für eine elektrische Isolierung sorgen soll. Das Isolationsmaterial wird dazu vor der Bewicklung in die Nut zwischen Statorwand und Polhorn eingelegt. Um eine Beschädigung des Isolationsmaterials beim Bewickeln zu vermeiden, ist es vorteilhaft, dies im Bereich der Statorwand zu fixieren. Die Fixierung kann dabei erfolgen, indem das Isolationsmaterial an die Statorwand angedrückt wird.

Vorteilhafterweise geschieht der Andruck in Richtung der Außenseite der Statorhalbschale, um ein optimales Anliegen des Papiers zu gewährleisten. Die hierfür am Aufnahmewerkzeug vorgesehene Andruckvorrichtung muss hierzu in einer Bewegung geführt werden, in der die Andruckvorrichtung zunächst das Isolationsmaterial von der Außenseite der Statorhalbschale her kommend umgreift und dann in einer zur Außenseite der Statorhalbschale hin gerichteten Bewegung das Isolationsmaterial an die Statorwand andrückt. Hierfür kann beispielsweise eine Kulissenführung vorgesehen sein, die eine gewinkelte, insbesondere eine L-förmige Kontur aufweist, um die Änderung der Bewegungsrichtung vom Umgreifen zum Andrücken des Isolationsmaterials zu bewirken.

Weiterhin ist es vorteilhaft, das Isolationsmaterial nicht nur im Bereich der Statorwand, sondern auch im Bereich der Polhörner zu fixieren. Die Fixierung geschieht dabei vorzugsweise durch das Gegenlagerwerkzeug, indem insbesondere das Isolationsmaterial durch dieses eingeklemmt wird.

Vorzugsweise weist das Gegenlagerwerkzeug hierfür eine Klemmvorrichtung auf, die im Bereich der Polhörner einer am Aufnahmewerkzeug aufgenommenen Statorhalbschale angeordnet ist. Diese Klemmvorrichtung wird vorzugsweise durch eine Mechanik beim Angriff des Gegenlagerwerkzeugs an der Statorhalbschale betätigt und klemmt dadurch selbsttätig beim Zusammenfahren von Aufnahmewerkzeug und Gegenlagerwerkzeug das Isolationsmaterial ein.

Weiterhin ist es vorteilhaft, dass das Aufnahmewerkzeug eine Führung, die insbesondere als Vertiefung oder Kanal gestaltet ist, aufweist, die durch ihre Positionierung am Aufnahmewerkzeug geeignet ist, zu Beginn des Wickelvorgangs den in das Werkzeug einlaufenden Draht an den zu bewickelnden Bereich zwischen einem Polhorn und der Statorwand heranzuführen, bzw. einen Freiraum für das zur Spule führende Drahtende bereit stellt, so dass dieses Drahtende bei der Bewicklung in diesen Freiraum ausweichen kann und nicht durch den Aufbau der Wicklung geschädigt wird.

Vorteilhafterweise wird vor dem Entnehmen der bewickelten Statorhalbschale aus dem Aufnahmewerkzeug die Spule elektrisch kontaktiert und durch das Anlegen eines elektrischen Stromes aufgeheizt, wobei eine auf dem Draht aufgebrachte Beschichtung zumindest teilweise temporär aufgeschmolzen wird. Dabei erreicht der Draht vorzugsweise eine Temperatur, die geeignet ist, eine vorzugsweise thermoplastische Beschichtung auf dem Draht zumindest so weit aufzuschmelzen, dass ein Verbacken der Drähte miteinander erzielt wird. Dementsprechend handelt es sich bei der Beschichtung insbesondere um einen Backlack, welcher beim Abkühlen nach dem Verbacken noch eine hinreichende elektrische Isolation der einzelnen Windungen der Spule untereinander gewährleistet. Die Temperatur, die zum Verbacken erreicht werden muss, hängt vom Draht, insbesondere von der Beschichtung des Drahtes ab. Vorzugsweise beträgt die Temperatur dabei 220°C +/- 20°C.

Vorteilhafterweise kann auf die Spule eine Pulverbeschichtung aufgebracht werden, wobei vorzugsweise die Restwärme eines vorhergehenden Aufheizens des Drahtes, beispielsweise zum Verbacken der einzelnen Windungen mit einem Backlack, genutzt wird, um die Pulverbeschichtung selektiv auf dem Draht aufzubringen. Hierzu wird die bewickelte Statorhalbschale mit dem noch heißen Draht in ein Pulverbad eingebracht, mit dem Ergebnis, dass das Pulver selektiv auf dem Draht, nicht aber auf der Statorhalbschale anhaftet und anschmilzt, so dass sich im Ergebnis eine Pulverbeschichtung nur des Drahtes ergibt. Der Pulverbeschichtungsvorgang findet vorzugsweise bei Temperaturen um ca. 150°C statt. Wird die Restwärme des Verbackprozesses genutzt, so muss dieser bei einer ausreichend hohen Temperatur stattfinden, um eine ausreichend lange Abkühlphase zu verursachen. Diese wird benötigt, um ausreichend Zeit zu haben, die bewickelten Statorhalbschalen aus der Vorrichtung zu entnehmen und in das Pulverbad einzubringen.

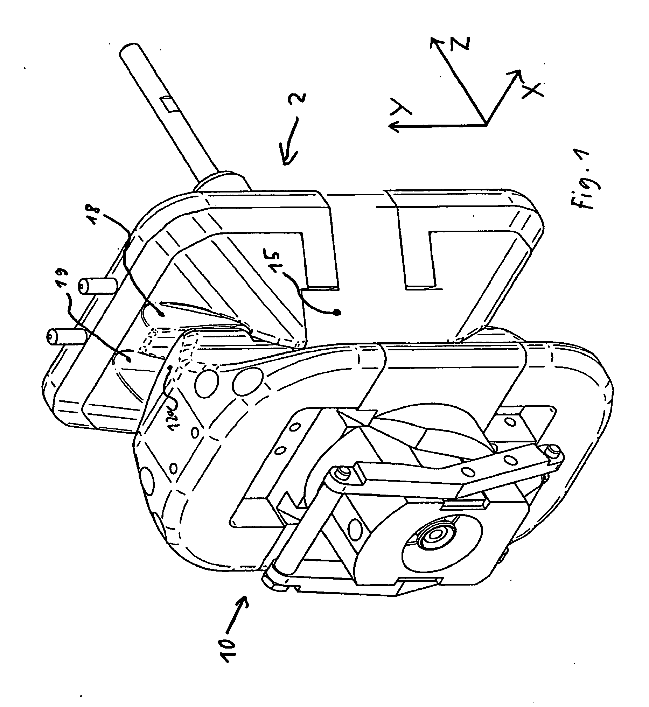

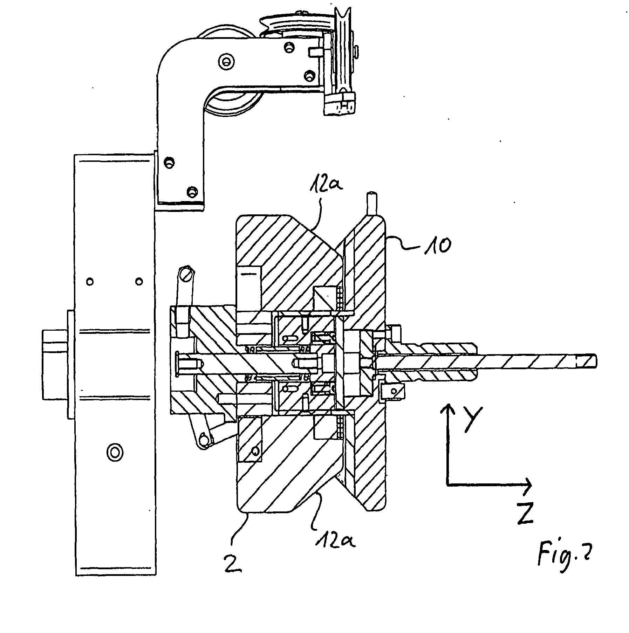

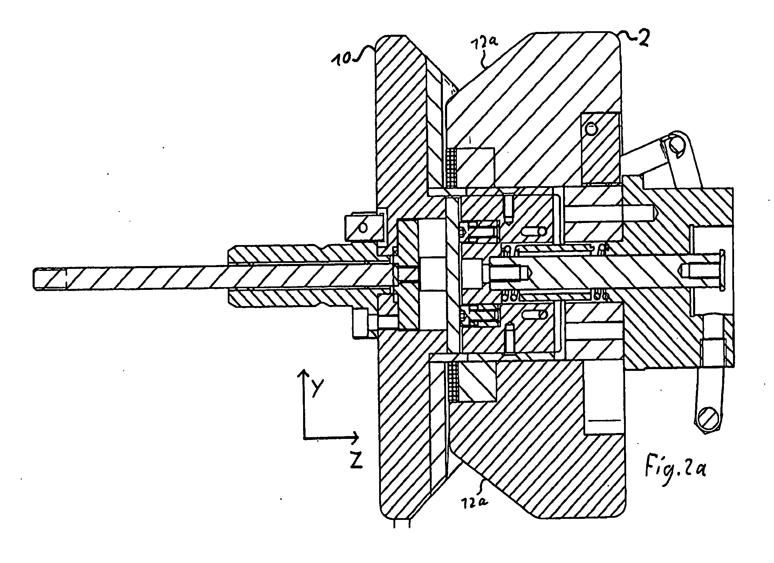

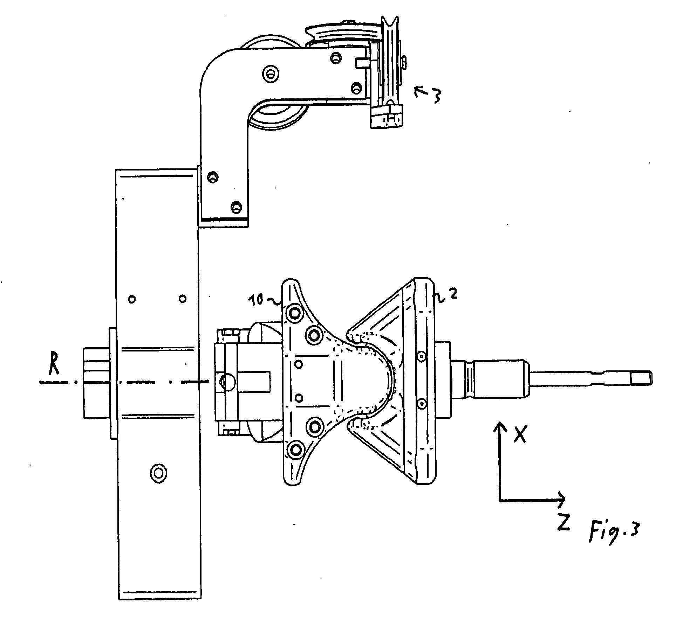

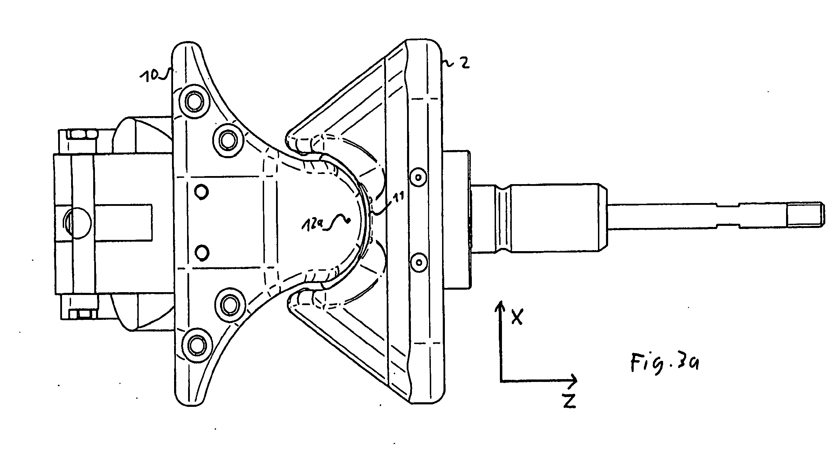

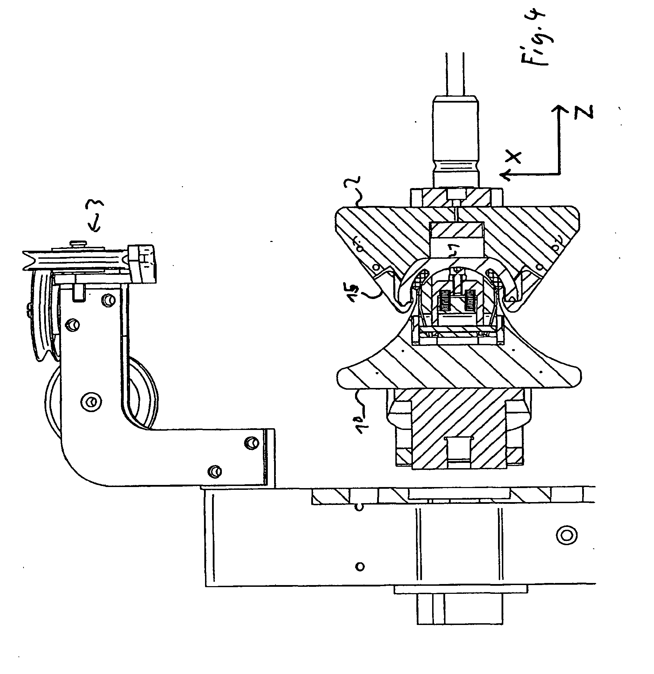

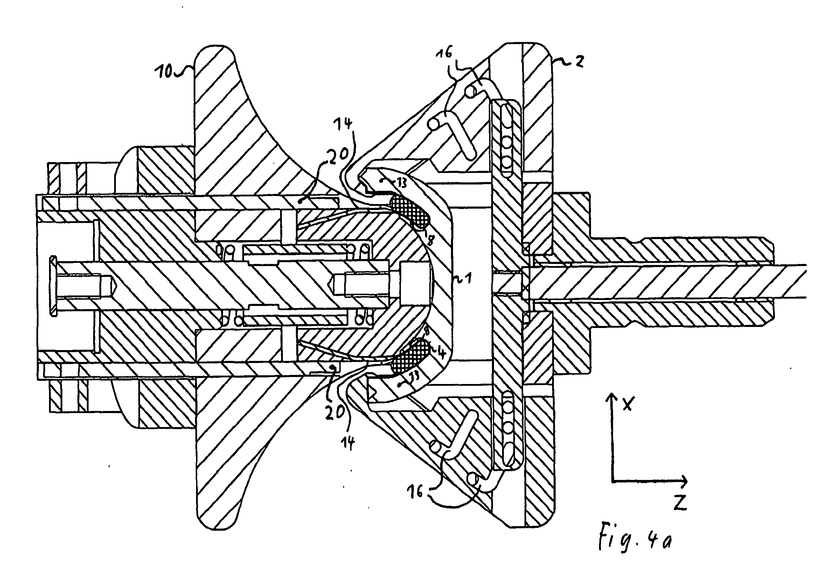

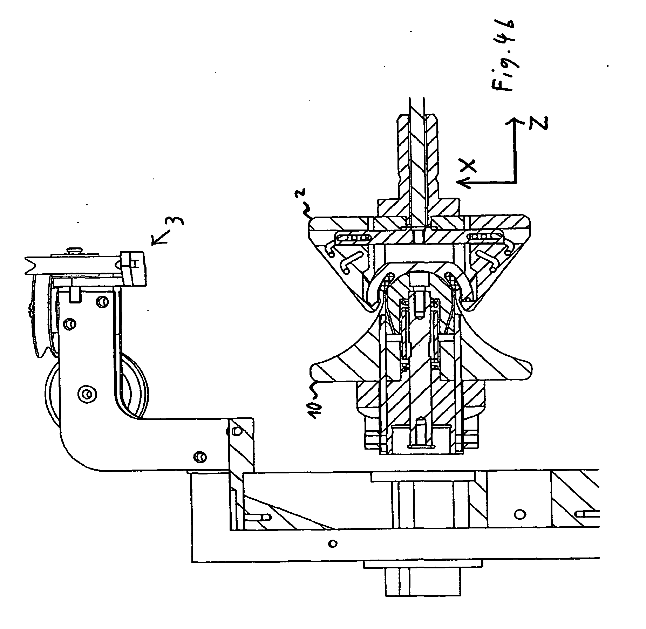

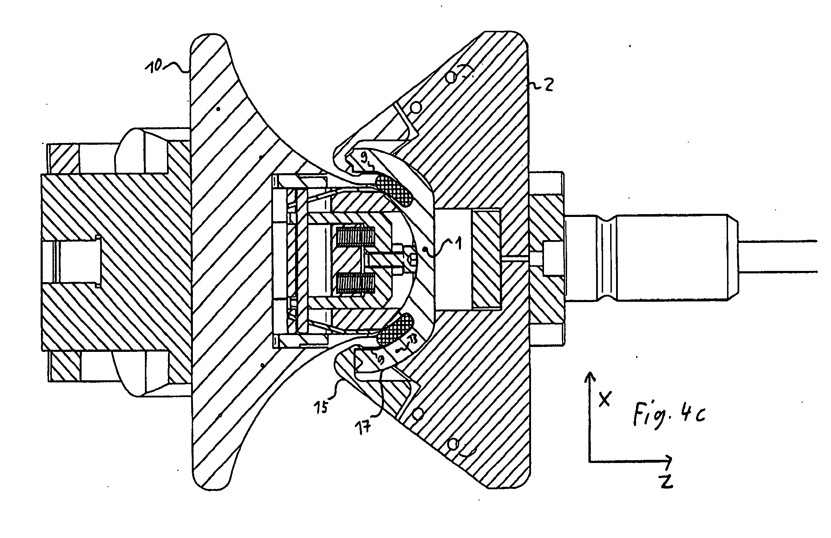

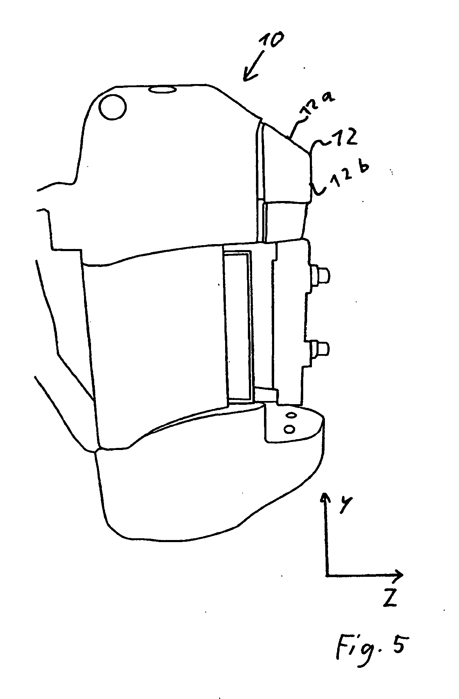

Die Erfindung wird im Folgenden anhand der Figuren 1 bis 5 schematisch näher erläutert. Es zeigen:
- Figur 1 -: eine schematische, perspektivische Ansicht eines zusammengefahrenen Verbunds aus Aufnahmewerkzeug und Gegenlagerwerkzeug,
- Figur 2 und Figur 2a -: Schnittdarstellungen einer beispielhaften erfindungsgemäßen Vorrichtung in einer parallel zur Statorachse verlaufenden Schnittebene,
- Figur 3 und Figur 3a -: Draufsichten aus Richtung der Statorhalbachse auf eine beispielhafte erfindungsgemäße Vorrichtung,
- Figur 4 bis Figur 4c -: Schnittdarstellungen einer beispielhaften erfindungsgemäßen Vorrichtung mit einer rechtwinklig zur Statorhalbachse verlaufenden Schnittebene,
- Figur 5 -: eine vereinfachte schematische Darstellung eines beispielhaften erfindungsgemäßen Gegenlagerwerkzeugs.

Die beispielhafte erfindungsgemäße Vorrichtung weist ein Aufnahmewerkzeug 2 und ein Gegenlagerwerkzeug 10 auf, welche in Richtung der Achse Z zusammengefahren werden können, so dass eine Statorhalbschale 1 zwischen den Werkzeugen fixiert werden kann. Das beispielhafte erfindungsgemäße Aufnahmewerkzeug weist eine Führung 18 für den Startdraht der Spulenwicklung auf sowie eine weitere Führung 19, mit der das zweite Drahtende wieder aus der Spule hinaus geführt werden kann, beispielsweise um im weiteren Verfahren elektrisch kontaktiert werden zu können, um ein Verbacken zu ermöglichen.

Weiterhin weist das Aufnahmewerkzeug 2 die Andruckvorrichtung 15 auf. Diese ist derart gestaltet, dass sie das Isolationsmaterial 9 umgreifen und in Richtung der Außenseite 17 der Statorhalbschale 1 an die Statorwand 13 andrücken kann. Die notwendige Änderung der Bewegungsrichtung der Andruckvorrichtung 15 beim Umgreifen und anschließenden Andrücken des Isolationsmaterials 9 an die Statorwand 13 wird dabei durch die L-förmige Kulissenführung 16 ermöglicht.

Am Gegenlagerwerkzeug 11 sind Schieberelemente 20 vorgesehen, welche die Spule 4 in die Nut zwischen der Statorwand 13 und den Polhörnern 8 der am Aufnahmewerkzeug 2 aufgenommenen Statorhalbschale 1 drücken können.

Weiterhin verfügt das Gegenlagerwerkzeug 10 über eine Klemmvorrichtung 14, welche dazu dient, das Isolationsmaterial 9 im Bereich der Polhörner 8 zu fixieren.

Das rotierende Wickelwerkzeug 3 rotiert um die Rotationsachse R, welche längsparallel zur Zusammenschieberichtung Z von Aufnahmewerkzeug 2 und Gegenlagerwerkzeug 10 verläuft und rechtwinklig zur Statorachse, welche längsparallel zur Richtung Y angeordnet ist, die Statorachse schneidet.

Im Bereich des Wickelkopfes 11 ist das Drahtablenkelement 12 angeordnet. Dieses weist zum einen die Drahtabgleitfläche 12a auf, an der der Draht beim Bewickeln mit dem rotierenden Wickelwerkzeug abgleitet und so einen Impuls in Richtung Aufnahmewerkzeug erhält, sowie eine leichte Hinterschneidung 12b, die sich bei der Draufsicht aus einer zur Statorachse parallelen Richtung Y ergibt. Diese Hinterschneidung sorgt dafür, dass der Draht 4 nach dem Abgleiten von der Drahtabgleitfläche 12a frei fliegend in Richtung seiner Solllage auf der Wicklung zum Liegen kommt.

## Patentansprüche

1. Verfahren zur Wicklung eines Drahtes (4) zu einer spule (5) für einen zweipoligen Stator, wobei eine Statorhalbschale (1) an einem Aufnahmewerkzeug (2) aufgenommen wird, ein Gegenlagerwerkzeug (10) an der Innenseite (7) der Statorhalbschale (1) angreift und die Statorhalbschale (1) durch ein um eine Rotationsachse relativ zu dem Aufnahmewerkzeug (2) und dem Gegenlagerwerkzeug (10) rotierendes Wickelwerkzeug (3), insbesondere einen Flyer, bewickelt wird, wobei der Draht beim Bewickeln im Bereich des Wickelkopfes (11) in Richtung der Außenseite (17) der an dem Aufnahmewerkzeug (2) aufgenommenen Statorhalbschale (1) abgelenkt wird, insbesondere indem der Draht (4) durch das rotierende Wickelwerkzeug (3) an einem aus der Kontur des Gegenlagerwerkzeugs (10) hervortretenden Drahtablenkelement entlang geführt wird, wobei die Statorhalbschale (1) relativ zur Rotationsachse des wickelwerkzeugs (3) so positioniert ist, dass die Längsachse eines mit der Statorhalbschale (1) gebildeten Stators die Rotationsachse des Wickelwerkzeugs (3) rechtwinklig schneiden würde.

2. Verfahren nach Anspruch 1,
**dadurch gekennzeichnet,**
**dass** der Drahtabschnitt zwischen dem rotierenden Wickelwerkzeug (3) und dem bereits zur Spule (5) gewickelten Drahtabschnitt nach der Ablenkung in Richtung der Außenseite (17) der am Aufnahmewerkzeug (2) aufgenommenen Statorhalbschale (1) den Kontakt zum Drahtablenkelement (12) verliert, bevor er seine Endposition einnimmt.

3. Verfahren nach Anspruch 1 oder 2,
**dadurch gekennzeichnet,**
**dass** ein Isolationsmaterial (9), insbesondere ein Papier, an der Statorhalbschale (1) im Bereich der Statorwand (13) fixiert, insbesondere an die Statorwand (13) angedrückt wird, wobei die Fixierung, insbesondere der Andruck, an der Statorwand (13) vorzugsweise in Richtung der Außenseite (17) der an dem Aufnahmewerkzeug (2) aufgenommenen Statorhalbschale (1) erfolgt.

4. Verfahren nach einem der vorigen Ansprüche,
**dadurch gekennzeichnet,**
**dass** ein Isolationsmaterial (9), insbesondere ein Papier, im Bereich der Polhörner (8), vorzugsweise durch das Gegenlagerwerkzeug (10) fixiert, vorzugsweise eingeklemmt wird.

5. Verfahren nach Anspruch einem der vorigen Ansprüche,
**dadurch gekennzeichnet,**
**dass** vor dem Entnehmen der bewickelten Statorhalbschale (1) aus dem Aufnahmewerkzeug (2) die Spule (5) elektrisch kontaktiert und durch das Anlegen eines elektrischen Stromes aufgeheizt wird, vorzugsweise auf 220°C +/- 20°C, wobei eine auf den Draht (4) aufgebrachte, vorzugsweise thermoplastische Beschichtung zumindest teilweise temporär aufgeschmolzen wird.

6. Verfahren nach Anspruch einem der vorigen Ansprüche,
**dadurch gekennzeichnet,**
**dass** auf die Spule (5) eine Pulverbeschichtung aufgebracht wird, wobei vorzugsweise die Restwärme eines vorhergehenden Aufheizens des Drahtes (4) genutzt wird, vorzugsweise bei einer Temperatur des Drahtes von ungefähr 150°C.

7. Vorrichtung zur Wicklung eines Drahtes (4) zu einer Spule (5) für einen zweipoligen Stator, ein Aufnahmewerkzeug (2) zur Aufnahme einer Statorhalbschale (1), ein Gegenlagerwerkzeug (10) und ein um eine Rotationsachse rotierendes Wickelwerkzeug (3), insbesondere einen Flyer, aufweisend, wobei
das Gegenlagerwerkzeug (10) im Bereich mindestens eines Wickelkopfes (11) der zu erzeugenden Spule (5) ein Drahtablenkelement (12) aufweist, **dadurch gekennzeichnet, dass** die Statorhalbschale (1) relativ zur Rotationsachse des Wickelwerkzeugs (3) so positionierbar ist, dass die Längsachse eines mit der Statorhalbschale (1) gebildeten Stators die Rotationsachse des Wickelwerkzeugs (3) rechtwinklig schneiden würde.

8. Vorrichtung nach Anspruch 7,
**dadurch gekennzeichnet,**
**dass** das Drahtablenkelement (12) in Richtung der Außenseite (17) der am Aufnahmewerkzeug (2) aufgenommenen Statorhalbschale (1) aus der Kontur des Gegenlagerwerkzeugs (10) hervortritt.

9. Vorrichtung nach einem der Ansprüche 7 oder 8,
**dadurch gekennzeichnet,**
**dass** das Gegenlagerwerkzeug (10) eine Klemmvorrichtung (14) zur Fixierung eines Isolationsmaterials (9) im Bereich der Polhörner (8) einer am Aufnahmewerkzeug (2) aufgenommenen Statorhalbschale (1) aufweist.

10. Vorrichtung nach einem der Ansprüche 7 bis 9,
**dadurch gekennzeichnet,**
**dass** das Aufnahmewerkzeug (2) eine Andruckvorrichtung (15) zur Fixierung eines Isolationsmaterials (9) an der Statorwand (13) aufweist.

11. Vorrichtung nach Anspruch 10,
**dadurch gekennzeichnet,**
**dass** die Andruckvorrichtung eine Kulissenführung (16) aufweist, wobei die Kulissenführung (16) eine insbesondere gewinkelte, vorzugsweise eine L-förmige Kontur aufweist.

12. Vorrichtung nach einem der Ansprüche 7 bis 11,
**dadurch gekennzeichnet,**
**dass** das Aufnahmewerkzeug (2) eine Führung (18), insbesondere eine Vertiefung oder einen Kanal, aufweist, die geeignet ist, den Draht (4) zu Beginn des Wickelvorgangs an den zu bewickelnden Bereich zwischen einem Polhorn (8) und der Statorwand (13) heranzuführen und/oder einen Freiraum für das zur Spule führende Drahtende bereitzustellen.

13. Vorrichtung nach einem der Ansprüche 7 bis 12,
**dadurch gekennzeichnet,**
**dass** das Gegenlagerwerkzeug (10) Schieberelemente (20) aufweist, die geeignet sind, zwischen den Polhörnern (8) und der Statorwand (13) verlaufende Drahtabschnitte in Richtung des Aufnahmewerkzeugs (2) zu drücken.

## Claims

1. Method for winding a wire (4) into a coil (5) for a double-pole stator, wherein a stator half shell (1) is received on a mounting tool (2), a counter bearing tool (10) engages on the inside (7) of the stator half shell (1), and the stator half shell (1) is wound up by a winding tool (3), more particularly a flyer, which rotates about an axis of rotation relative to the mounting tool (2) and the counter bearing tool (10), wherein the wire during winding is deflected in the region of the winding head (11) in the direction of the outside (17) of the stator half shell (1) which is received on the mounting tool (2), more particularly in that the wire (4) is guided by the rotating winding tool (3) along a wire deflection element which emerges from the contour of the counter bearing tool (10), wherein the stator half shell (1) is positioned relative to the axis of rotation of the winding tool (3) so that the longitudinal axis of a stator which is formed with the stator half shell (1) would intersect at right angles the axis of rotation of the winding tool (3).

2. Method according to claim 1,
**characterised in that**
the wire section loses contact with the wire deflection element (12) between the rotating winding tool (3) and the wire section already wound into the coil (5) after deflection in the direction of the outside (17) of the stator half shell (1) received on the mounting tool (2), before it occupies its end position.

3. Method according to claim 1 or 2,
**characterised in that**
an insulation material (9), more particularly a paper, is fixed on the stator half shell (1) in the region of the stator wall (13), more particularly is pressed against the stator wall (13), wherein the fixing, more particularly the contact pressure, is undertaken on the stator wall (13) preferably in the direction of the outside (17) of the stator half shell (1) received on the mounting tool (2).

4. Method according to one of the preceding claims,
**characterised in that**
an insulation material (9), more particularly a paper, is fixed, preferably clamped, in the region of the pole horns (8), preferably by the counter bearing tool (10).

5. Method according to one of the preceding claims
**characterised in that**
prior to removing the wound stator half shell (1) from the mounting tool (2), the coil (5) is electrically contacted and is heated up, preferably to 220° C +/- 20° C, by applying an electrical current, wherein a coating, preferably a thermoplastics coating applied to the wire (4) is melted at least partially temporarily.

6. Method according to one of the preceding claims,
**characterised in that**
a powder coating is applied to the coil (5) wherein the residual heat of a previous heating up of the wire (4) is advantageously used, preferably at a temperature of the wire of about 150° C.

7. Device for winding a wire (40 into a coil (5) for a double-pole stator, a mounting tool (2) for receiving a stator half shell (1), having a counter bearing tool (10) and a winding tool (3), more particularly a flyer, which rotates about a rotational axis, wherein the counter bearing tool (10) has in the region of at least one winding head (11) of the coil (5) which is to be produced, a wire deflection element (12),
**characterised in that**
the stator half shell (1) can be positioned relative to the axis of rotation of the winding tool (3) so that the longitudinal axis of a stator formed with the stator half shell (1) would intersect the rotational axis of the winding tool (3) at right angles.

8. Device according to claim 7
**characterised in that**
the wire deflection element (12) emerges from the contour of the counter bearing tool (10) in the direction of the outside (17) of the stator half shell (1) received on the mounting tool (2).

9. Device according to one of claims 7 or 8
**characterised in that**
the counter bearing tool (10) has a clamping device (14) for fixing an insulation material (9) in the region of the pole horns (8) of a stator half shell (10) received on the mounting tool (2).

10. Device according to one of claims 7 to 9
**characterised in that**
the mounting tool (2) has a contact pressure device (15) for fixing an insulation material (9) on the stator wall (13).

11. Device according to claim 10
**characterised in that**
the contact pressure device has a slide guide (16) wherein the slide guide (16) has a contour which is in particular angled, and preferably L-shaped.

12. Device according to one of claims 7 to 11
**characterised in that**
the mounting tool (2) has a guide (18), more particularly an indentation or a channel, which is suitable to bring the wire (4) at the start of the winding process up to the area which is to be wound between a pole horn (8) and the stator wall (13) and/or to provide a free space for the wire end which is running to the coil.

13. Device according to one of claims 7 to 12
**characterised in that**
the counter bearing tool (10) has slide elements (20) which are suitable to press wire sections, which are running between the pole horns (8) and the stator wall (13), in the direction of the mounting tool (2).

## Revendications

1. Procédé d'enroulement d'un fil (4) pour former une bobine (5) pour un stator bipolaire, sachant qu'une demi-coque de stator (1) est prise en charge par un outil de réception (2), qu'un outil de contrebutée (10) attaque la face intérieure (7) de la demi-coque de stator (1) et que ladite demi-coque de stator (1) est bobinée par un outil d'enroulement (3), en particulier un flyer, qui tourne autour d'un axe de rotation par rapport à l'outil de réception (2) et à l'outil de contrebutée (10), sachant que le fil, lors de l'enroulement dans la région de la tête de bobine (11), est dévié dans la direction de la face extérieure (17) de la demi-coque de stator (1) prise en charge par l'outil de réception (2), en particulier que le fil (4) est conduit, par l'outil d'enroulement (3) en rotation, le long d'un élément déflecteur de fil qui fait saillie sur le contour de l'outil de contrebutée (10), sachant que la demi-coque de stator (1) est positionnée, par rapport à l'axe de rotation de l'outil d'enroulement (3), de telle manière que l'axe longitudinal d'un stator, formé avec la demi-coque de stator (1), coupe à angle droit l'axe de rotation de l'outil d'enroulement (3).

2. Procédé selon la revendication 1,
**caractérisé en ce que**
la section de fil, située entre l'outil d'enroulement (3) en rotation et la section déjà enroulée en bobine (5), perd, après déviation en direction de la face extérieure (17) de la demi-coque de stator (1) chargée sur l'outil de réception (2), le contact avec élément déflecteur de fil (12) avant de prendre sa position finale.

3. Procédé selon revendication 1 ou 2,
**caractérisé en ce que**,
dans la région de la paroi du stator (13), un matériau d'isolation (9), en particulier du papier, est fixé sur la demi-coque de stator (1), en particulier pressé sur la paroi du stator (13), sachant que la fixation, en particulier la pression sur la paroi du stator (13), est effectuée de préférence dans la direction de la face extérieure (17) de la demi-coque de stator (1) chargée sur l'outil de réception (2).

4. Procédé selon l'une des revendications précédentes,
**caractérisé en ce que**,
dans la région des cornes polaires (8), un matériau d'isolation (9), en particulier du papier, est fixé, préférentiellement serré, de préférence par l'outil de contrebutée (10).

5. Procédé selon l'une des revendications précédentes,
**caractérisé en ce que**
la bobine (5) est mise sous tension et chauffée, de préférence à 220°C +/- 20°C, par l'application d'un courant électrique, avant que la demi-coque de stator (1) bobinée soit retirée de l'outil de réception (2), sachant qu'un revêtement, de préférence thermoplastique, dont est pourvu le fil (4), est fondu sur celui-ci au moins partiellement temporairement.

6. Procédé selon l'une des revendications précédentes,
**caractérisé en ce que**,
sur la bobine (5), est appliqué un revêtement pulvérulent, sachant que l'on utilise de préférence la chaleur résiduelle du précédent chauffage du fil (4), de préférence à une température dudit fil d'environ 150°C.

7. Dispositif d'enroulement d'un fil (4) pour former une bobine (5) pour un stator bipolaire, comprenant un outil de réception (2) pour la réception d'une demi-coque de stator (1), un outil de contrebutée (10) et un outil d'enroulement (3), en particulier un flyer, qui tourne autour d'un axe de rotation, sachant que l'outil de contrebutée (10) présente un élément déflecteur de fil (12) dans la région d'au moins une tête (11) de la bobine (5) à former,
**caractérisé en ce que**
la demi-coque de stator (1) est positionnée, par rapport à l'axe de rotation de l'outil d'enroulement (3), de telle manière que l'axe longitudinal d'un stator, formé avec la demi-coque de stator (1), coupe à angle droit l'axe de rotation de l'outil d'enroulement (3).

8. Dispositif selon la revendication 7,
**caractérisé en ce que**
l'élément déflecteur de fil (12) fait saillie hors du contour de l'outil de contrebutée (10) en direction de la face extérieure (17) de la demi-coque de stator (1) chargée sur l'outil de réception (2).

9. Dispositif selon revendication 7 ou 8,
**caractérisé en ce que**
l'outil de contrebutée (10) présente un dispositif de serrage (14) pour la fixation d'un matériau d'isolation (9) dans la région des cornes polaires (8) d'une demi-coque de stator (1) chargée sur l'outil de réception (2).

10. Dispositif selon l'une des revendications 7 à 9,
**caractérisé en ce que**
l'outil de réception (2) présente un dispositif de pression (165) pour la fixation d'un matériau d'isolation (9) sur la paroi du stator (13).

11. Dispositif selon la revendication 10,
**caractérisé en ce que**
le dispositif de pression présente un guide de coulisse (16), sachant que ledit guide de coulisse (16) présente un contour en particulier enroulé, de préférence en forme de L.

12. Dispositif selon l'une des revendications 7 à 11,
**caractérisé en ce que**
l'outil de réception (2) présente un guidage (18), en particulier une cavité ou un canal, qui est apte à conduire le fil (4), au début de l'opération d'enroulement, dans la région à enrouler, entre l'une des cornes polaires (8) et la paroi du stator (13), et/ ou à mettre à disposition un espace libre à l'extrémité du fil conduisant à la bobine.

13. Dispositif selon l'une des revendications 7 à 12,
**caractérisé en ce que**
l'outil de contrebutée (10) présente des éléments coulissants (20) qui sont appropriés à presser, en direction de l'outil de réception (2), des sections de fil qui s'étendent entre les cornes polaires (8) et la paroi du stator (13).
